# EUROPEAN PATENT APPLICATION

(11) **EP 3 822 814 A2**
(43) Date of publication of application: **19.05.2021**
(21) Application number: 21164032.1
(22) Date of filing: 22.03.2021
(51) Int. Cl.: G06F 16/33, G06F 16/31, G06F 16/332

(54) **HUMAN-MACHINE INTERACTION METHOD AND APPARATUS BASED ON NEURAL NETWORK**

(30) Priority: 07.08.2020 CN 202010786352
(71) Applicant: BEIJING BAIDU NETCOM SCIENCE AND TECHNOLOGY CO. LTD., 100085 Beijing (CN)
(72) Inventor: WU, Hua, Beijing, 100085 (CN); WANG, Haifeng, Beijing, 100085 (CN); LIU, Zhanyi, Beijing, 100085 (CN)
(74) Representative: Laufhütte, Dieter

(57) **Abstract**

A human-machine interaction method and an apparatus based on a neural network is provided. The method includes: providing a user input as a first input for a neural network system; providing the user input for a conversation control system different from the neural network system; based on information relevant to the user input, processing the user input by the conversation control system; providing a processing result of the conversation control system as second input for the neural network system; and generating, by the neural network system, a reply to the user input based on the first and second input.

## Description

### TECHNICAL FIELD

The present disclosure relates to the technical field of artificial intelligence, in particular to the technical fields of natural language processing and knowledge graph, and particularly relates to a human-machine interaction method and an apparatus based on a neural network.

### BACKGROUND

An objective of an open domain conversation system is to make machines use natural language as a medium of information transfer just like people. The machines meet people's daily interaction requirements by answering questions, executing commands, chatting and the like. There is no limitation to the subject and content of the chat.

At present, the open domain conversation system mainly adopts a corpus-based retrieval method or generation method. Language materials that have actually appeared in the actual use of the language are stored in the corpus. In the actual conversation process, the user input has the problems of similar meanings but very different literal expressions, similar literal expressions but very different meanings and the like, resulting in that the corpus-based retrieval method or generation method generally has the problems of empty conversation content, unclear logic, irrelevant answer and the like.

The methods described in this section are not necessarily the methods that have been conceived or adopted before. Unless otherwise specified, it should not be assumed that any methods described in this section are considered as the prior art because they are included in this section. Similarly, unless otherwise specified, the problems mentioned in this section should not be considered to be recognized in any prior art.

### SUMMARY

According to one aspect of the present disclosure, a human-machine interaction method based on a neural network is provided. The human-machine interaction method based on the neural network includes: providing user input as first input for a neural network system; providing the user input for a conversation control system different from the neural network system; based on information relevant to the user input, processing the user input by the conversation control system; providing a processing result of the conversation control system as second input for the neural network system; and generating, by the neural network system, a reply to the user input based on the first and second input.

According to another aspect of the present disclosure, a human-machine interaction device based on a neural network is provided. The human-machine interaction device based on the neural network includes: a neural network system, configured to receive user input as first input; a conversation control system different from the neural network system, configured to receive the user input, wherein the conversation control system is further configured to process the user input based on information relevant to the user input and provide the processing result as second input for the neural network system; and the neural network system is further configured to generate a reply to the user input based on the first and second input.

According to another aspect of the present disclosure, further provided is a computer program product including instructions, which, when the program is executed by a computer, causes the computer to carry out the method described herein. The computer program product can be stored on a computer readable storage medium.

According to another aspect of the present disclosure, a computer-readable storage medium storing one or more programs is provided, the one or more programs including instructions, which, when executed by the processor of an electronic device, causes the electronic device to carry out the method described herein.

The human-machine interaction method based on the neural network according to the one or more examples of the present application of the present disclosure is helpful to improve the chat experience of users in the human-machine interaction process.

### BRIEF DESCRIPTION OF THE DRAWINGS

The accompanying drawings exemplarily illustrate one or more examples of the present application and constitute a part of the specification, and are used to explain the exemplary implementation manners of one or more examples of the present application together with the text description of the specification. The illustrated one or more examples of the present application are only for illustration and do not limit the scope of the claims. In all the accompanying drawings, the same reference numerals refer to similar but not necessarily identical elements.
FIG. 1 shows a flowchart of a human-machine interaction method based on a neural network according to one or more examples of the present application;
FIG. 2 shows a schematic diagram of a working process of a human-machine interaction device based on a neural network according to one or more examples of the present application;
FIG. 3 and FIG. 4 show a local schematic diagram of an intention knowledge graph according to one or more examples of the present application;
FIG. 5 shows a schematic diagram of a working process of a conversation control system according to one or more examples of the present application;
FIG. 6 shows a schematic composition block diagram of a conversation understanding module according to one or more examples of the present application; and
FIG. 7 shows a structural block diagram of an exemplary computing device capable of being applied to one or more examples of the present application.

### DETAILED DESCRIPTION

In the present disclosure, unless otherwise specified, the terms "first", "second" and the like are used to describe various elements and are not intended to limit the position relationship, the timing relationship or the importance relationship of the elements. Such terms are only for distinguishing one element from another element. In some examples, the first element and the second element may point to the same example of the element; and in some cases, based on the description of the context, the first element and the second element may also refer to different examples.

The terms used in the description of various examples in the present disclosure are only for describing specific examples and are not intended to perform limitation. Unless the context clearly indicates otherwise, if the number of the elements is not specifically limited, there may be one or a plurality of elements. In the addition, the term "and/or" used in the present disclosure covers any one and all possible combinations of the listed items.

The open domain conversation system has unlimited chat content and an arbitrary subject, and can answer questions, execute commands and chat by natural languages.

In the related art, the open domain conversation system obtains the intention of a user, distributes the user input to a plurality of interaction subsystems according to the intention, receives the return results of the plurality of interaction subsystems, then selects the result with the highest score according to a preset sorting strategy and returns the result to the user. The open domain conversation system has the following problems: since modules are cascaded, error transmission is liable to occur; the subsystems are independent of each other, so it is impossible to effectively transfer information or naturally switch among the subsystems; and knowledge cannot be effectively integrated into the deep-learning-based system, so that the open domain conversation system has the problems of empty conversation content, unclear logic, irrelevant answers and the like.

In view of one or more of the above technical problems, the present disclosure provides a human-machine interaction method based on a neural network. According to the method, based on information relevant to user input, the user input is processed by a conversation control system. Then, the user input and the processing result of the conversation control system are both provided for a neural network system as inputs, and the neural network system generates a reply to the user input, so that the information relevant to the user input can be integrated into a neural -network-system-based conversation system. The problem in the prior art that the human-machine interaction content is not ideal is solved by making full use of the relevant information, so that human-machine interaction has rich content and clear logic.

The technical solution of the present disclosure may be applied to all application terminals using the conversation system, for example, intelligent robots, mobile phones, computers, personal digital assistants, tablet computers, etc.

The human-machine interaction method based on the neural network is further described below with reference to the accompanying drawings.

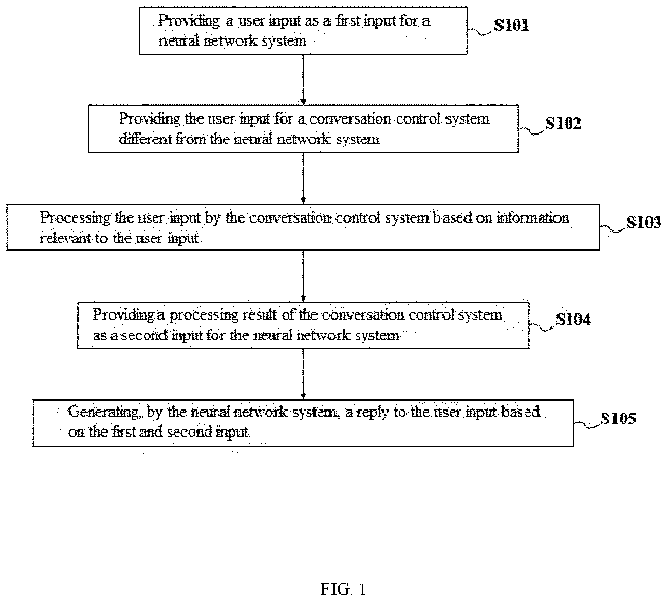

FIG. 1 shows a flowchart of a human-machine interaction method based on a neural network according to the present disclosure.

As shown in FIG. 1, the method includes: S101: a user input as a first input is provided for a neural network system; S102: the user input is provided for a conversation control system different from the neural network system; S103: based on information relevant to the user input, the user input is processed by the conversation control system; S104: a processing result of the conversation control system as second input is provided for the neural network system; and S105: the neural network system generates a reply to the user input based on the first and second input. Therefore, the information relevant to the user input is integrated into the conversation system based on the neural network system to make full use of the relevant information, so that the human-machine interaction has rich content and clear logic.

The user input may be, but not limited to text information or voice information. The user input may be preprocessed and then are provided, as first input, to the neural network system and the conversation control system. The preprocessing, for example, may be, but not limited to perform voice recognition on the voice information and convert the voice information into corresponding text information.

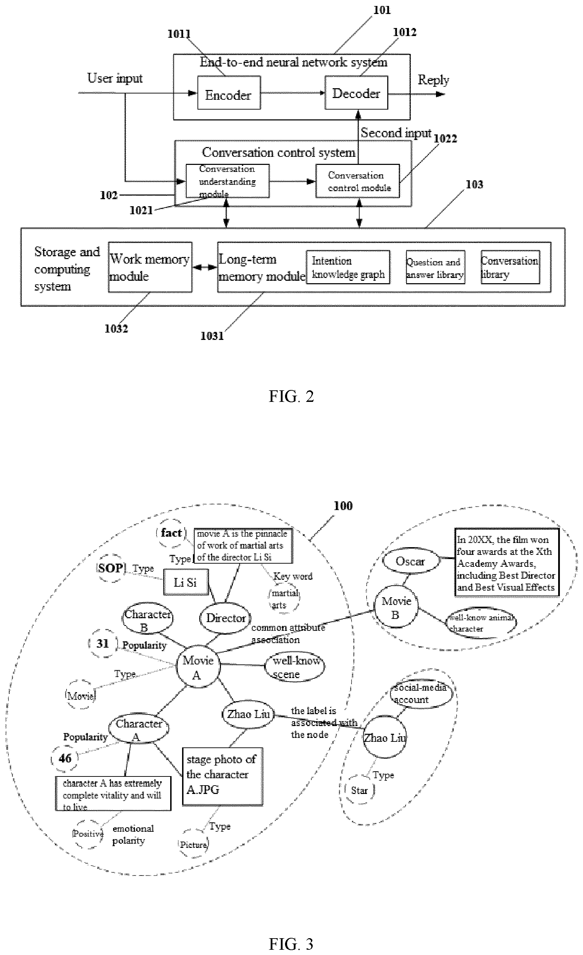

Referring to FIG. 2, the neural network system may be, but not limited to an end-to-end neural network system 101. The end-to-end neural network system 101 may include an encoder 1011 and a decoder 1012. The encoder 1011 may implicitly represent the input text content to generate a vector; and the decoder 1012 may generate a fluent natural language text according to a given input vector.

According to some examples, the encoder 1011 may be configured to receive the user input and the stored historical interaction information of the current human-machine interaction and encode the user input and the stored historical interaction information of the current human-machine interaction to generate an implicit vector, and the implicit vector is input to the decoder 1012. The decoder 1012 may be configured to receive the second input (that is, the processing result obtained by processing the user input by the conversation control system) and the implicit vector generated by the encoder 1011, and generate the reply to the user input. Therefore, the neural network system can generate a reply to the user input based on the current user input, the stored historical interaction information of the current human-machine interaction and the result obtained by processing the user input by the conversation control system based on the information relevant to the user input, thereby further ensuring that the reply content of the machine is in line with the current human-machine interaction scene and the conversation logic is clear.

The end-to-end neural network system, for example, may adopt a Transformer neural network system or a UniLM neural network system.

According to some examples, the information relevant to the user input may include work memory information which is valid only during the current human-machine interaction and long-term memory information. As an exemplary example, the information relevant to the user input may be prestored information. In this case, the long-term memory information may be information that the conversation system needs to store for a long time, and may include various kinds of knowledge information, for example, may include at least one of the followings: common sense, domain knowledge, language knowledge, a question-and-answer library and a conversation library. The work memory information may be acquired from the long-term memory information based on the current human-machine interaction content. That is, the work memory information is knowledge information relevant to the current human-machine interaction content. Therefore, the knowledge information relevant to the current human-machine interaction information content can be integrated into the conversation system based on the neural network system, a reply to the user input in the current human-machine interaction situation based on the relevant knowledge information is planned, and the knowledge information is fully utilized, so that the human-machine interaction has rich content and clear logic. It may be understood that the information relevant to the user input may also include information captured from the network in real time, which is not limited here.

According to one or more examples of the present application, the long-term memory information may include, but is not limited to, an intention knowledge graph, a question-and-answer library and a conversation library. The data content, the data organization form and the like of the intention knowledge graph, the question-and-answer library and the conversation library will be first described below.

The intention knowledge graph can start from the knowledge interaction need of the conversation scene, which not only meets the knowledge query function, but also meets association, analogy, prediction and the like in multiple rounds of multi-scene interaction. The nodes of the intention knowledge graph are organized orderly, which is convenient for text calculation and control of the knowledge information. Behavior skip (scene skip and content skip in the same scene) in the conversation can be supported by calculating the knowledge information, and strong semantic transfer logic is achieved. The intention knowledge graph integrates different types of multi-scene information and can provide the ability to understand language from multiple perspectives.

According to one or more examples of the present application, the intention knowledge graph may include knowledge information in the form of a first directed graph including nodes and one or more directed edges; and the nodes in the first directed graph are structured data including semantic information and logical control information. The one or more directed edges in the first directed graph may represent a relevance attribute between the relevant nodes, and a relevance attribute between the nodes and the corresponding logical control information. It may be understood that other knowledge information may also adopt a data organization form of the first directed graph and is not limited to the intention knowledge graph. How to represent the knowledge information by the first directed graph is described herein by taking the intention knowledge graph as an example.

According to one or more examples of the present application, the logical control information of the intention knowledge graph may include information for screening nodes relevant to the current human-machine interaction, for example, popularity, timeliness, emotion, etc. for screening the nodes relevant to the current human-machine interaction content, so that the relevant knowledge information can be retrieved when the user actively initiates knowledge chat, and the conversation content has clear logic. For example, a first popularity threshold may be set, and a node with a popularity greater than the first popularity threshold in the corresponding logical control information may be screened out from the nodes relevant to the current human-machine interaction content in the work memory information. A first effective time point may be set, and a node with timeliness information after the first effective time point in the corresponding logical control information is screened out from the nodes relevant to the current human-machine interaction content in the work memory information. A first preset emotion type may be set, and a node with an emotion type being the first preset emotion type in the corresponding logical control information is screened out from the nodes relevant to the current human-machine interaction content.

According to one or more examples of the present application, the logical control information of the intention knowledge graph may further include information for determining the degree of relevance between the nodes in the current human-machine interaction, for example, popularity, a relevance relationship between the nodes, etc. for expanding the nodes relevant to the current human-machine interaction content, so that the machine can actively switch, trigger or recommend knowledge chat, thereby making the conversation rich and avoiding an awkward conversation. For example, a second popularity threshold may be set, and a node with a popularity greater than the second popularity threshold in the corresponding logical control information may be acquired from each relevant node of the user input in the long-term memory information. The current node may be expanded to the node with the highest degree of relevance with the current node according to the relevance relationship.

The nodes of the intention knowledge graph may include a plurality of different types of nodes. According to one or more examples, nodes in the first directed graph may include a first type of nodes and a second type of nodes. The semantic content of one of the second type of nodes may be a part of the semantic content of one or more first type of nodes relevant to the one of the second type of nodes, and the logical control information of the one of the second type of nodes includes at least one of the followings: the popularity of the one of the second type of nodes under the one or more first type of nodes relevant to the one of the second type of nodes, a relevance skip relationship between the one of the second type of nodes and at least one of other second type of nodes, and a subtype of the one of the second type of nodes. Therefore, knowledge information of one or more second type of nodes relevant to the semantic meaning of one of the first type of nodes may be acquired by querying the one of the first type of nodes, thereby facilitating text calculation and control of the knowledge information.

The first type of nodes, for example, may be core nodes in the following Table 1. The second type of nodes, for example, may be label nodes in the following Table 1. The directed edge may represent a relevance attribute between core nodes, a relevance attribute between a core node and a label node, and a relevance attribute between each node and the corresponding logical control information. The core node and the label node may be structured data, so that the semantic content can be understood and controlled. Each core node may be a basic unit with semantic integrity, and may include an entity, a concept, an event and an instruction, for example, may be people, an article, a structure, a product, a building, a place, an organization, an event, an artistic work, a scientific technology, scientific dogma, etc. The logical control information of the core node may include popularity, timeliness, all labels for recalling the label nodes, a task API, etc. Each core node may include a plurality of relevant label nodes. The semantic content of the label nodes may be a part of the semantic content of the core node relevant to the label nodes, and the label nodes and the core node have a partial and integral relationship.

**Table 1 Representation of the Nodes of the Intention Knowledge Graph**

| | |
|---|---|
| **Core node** | **Definition:** being a basic module with semantic integrity, and including an entity, a concept, an event and an instruction |
| | **Logical control information:** popularity, timeliness, all labels for recalling the label nodes, a task API, etc. |
| **Label node** | **Definition:** being a part of the semantic content of the core nodes, having a partial and integral relationship between the label nodes and the core nodes, and being a subject or summary of the content node |
| | **Logical control information:** popularity under the core nodes, a relevance skip relationship between the label nodes, types of the label nodes, etc. |
| **Content node** | **Definition:** being conversation content and having the characteristics of multiple modes (words, sentences, pictures, videos, etc.), diversity, fine granularity, etc. |
| | **Logical control information:** core labels, keywords, degree of importance of the core labels in the conversation content, general phrases of the conversation content, types, emotional polarity, scores, etc. |

According to one or more examples of the present application, the information relevant to the current human-machine interaction may include node information relevant to the user input and acquired from the first directed graph. The user input may be mapped to the core nodes of the first directed graph, and the core nodes acquired through mapping and the label nodes relevant to the core nodes acquired through mapping may serve as knowledge information relevant to the user input. If the user input cannot be mapped to the core nodes of the first directed graph, and the core node acquired through mapping of historical user input of the current human-machine interaction content may serve as the core node of the current user input. For example, if the current user input is "who is the protagonist?", the current user input has no corresponding core node in the first directed graph. In this case, the corresponding core node in the first directed graph last time in the current human-machine interaction may serve as the core node of the current user input so as to acquire knowledge information relevant to the current user input. The current human-machine interaction content may include the current user input and the historical interaction information of the current human-machine interaction.

As shown in FIG. 3, a solid circle ("movie A", "movie B" and "Zhao Liu") indicates the core node, a solid ellipse indicates a label node, and a dotted circle indicates logical control information. Each dotted ellipse may surround a node unit as an information unit relevant to the user input. A solid line segment represents a directed edge between the nodes, and a dotted line segment represents the directed edge between the node and the corresponding logical control information. That is, when the user input is mapped to the core node of one node unit (the node unit 100 in FIG. 3), all node information of the node unit is considered as knowledge information relevant to the user input and is added into the work memory information. It should be noted that according to the size of the available computing resource of the system, the node unit where at least one of other core nodes relevant to one core node acquired through mapping is located may be considered to be relevant to the user input and is added to the work memory information, which is not limited here. The technical solutions of the present disclosure are specifically described by taking the case where the node unit where the core nodes acquired through mapping is located serves as knowledge information relevant to the user input as an example.

By taking the case where the first type of node (core node) is a movie entity "movie A" as an example, the labels for a "movie A" user to recall the label node may include actors, characters, directors, scenes, etc. The label nodes (the second type of nodes) relevant to the first type of node may include "Zhao Liu" (assumed to be an actor), "character A", "character B", "Li Si" (assumed to be a TV director) and "well-known scene". The label node "Zhao Liu" corresponds to an actor label of the relevant first type of node "movie A", "character A" and "character B" correspond to a character label of the relevant first type of node "movie A", "Li Si" corresponds to a director label of the relevant first type of node "movie A", and the well-known scene" corresponds to a scene label of the relevant first type of node "movie A". The core node relevant to the core node "movie A" may include "movie B", and the core node relevant to the label node "Zhao Liu" may include "Zhao Liu". When the user input is mapped to the core node "movie A", the core node "movie A" and the label nodes "Zhao Liu", "character A", "character B", "Li Si" and "well-known scene" may serve as information relevant to the user input.

According to one or more examples of the present application, each of nodes in the first directed graph may further include a third type of nodes, the semantic content of the third type of nodes supports multi-mode content, and the logical control information of one of the third type of nodes may include at least one of the followings: information of one or more the second type of nodes relevant to the one of the third type of nodes and information for representing the semantic content of the one of the third type of nodes. Therefore, by setting the third type of nodes, the multi-mode semantic content can be supported and the conversation content can be enriched.

The third type of nodes, for example, may be the content nodes in the above table. The directed edge may further represent a relevance attribute between a label node (one of the second type of nodes) and a content node. The content nodes may be unstructured data and can support rich multi-mode content. Each of the core nodes (the first type of nodes) may include a plurality of content nodes, and the label nodes relevant to the content nodes may be subjects or summaries of the content nodes. The content nodes may include conversation content and have the characteristics of multiple modes (which may be words, sentences, pictures, videos, etc.), diversity, fine granularity, etc. The logical control information of one of the content nodes, for example, may include core labels, keywords, degree of importance of the core labels in the semantic content of the content nodes, general phrases of the semantic content of the content nodes, types of the label nodes relevant to the content nodes, emotional polarity of the label nodes relevant to the content nodes, scores of the label nodes relevant to the content nodes, etc.

According to one or more examples of the present application, the information relevant to the current human-machine interaction content may include node information relevant to the user input and acquired from the first directed graph. The user input may be mapped to the core nodes of the first directed graph. The core nodes acquired through mapping, the label nodes relevant to the core nodes acquired through mapping and the content labels relevant to the acquired label nodes may serve as information relevant to the user input.

As shown in FIG. 3, a rectangular frame indicates the content node. By taking the case where one of the first type of nodes (core node) is the movie entity "movie A" as an example, the label nodes (second type of nodes) relevant to the one of the first type of nodes may include "Zhao Liu", "character A", "character B", "Li Si" and "well-known scene". The content nodes relevant to the label node "Zhao Liu" and the label node "character A" may include "the stage photo of the character A.jpg" (assumed to be a well-known stage photo of the character A in the movie A). The content nodes relevant to the label node "character A" may further include "the character A has extremely complete vitality and will to live". The content nodes relevant to the label node "Li Si" may include: the movie A is the pinnacle of work of martial arts of the director Li Si. When the user input is mapped to the core node "movie A", the core node "movie A" and the label nodes "Zhao Liu", "character A", "character B", "Li Si" and "well-known scene" and the content nodes relevant to the label nodes "Zhao Liu", "character A" and "Li Si" may serve as information relevant to the user input

The two nodes being relevant to each other may refer to that the two nodes may be related by a directed path including at least one directed edge. Different nodes may be connected through a directed edge, and a relevance attribute between the connected nodes is indicated. The directed edge, for example, may include a relevant edge from a core node to a core node, a relevant edge from a core node to a label node, a relevant edge from a label node to a core node, and a relevant edge from a label node to a content node. The attributes of the directed edge may include a semantic relationship (such as director, work, wife, etc.), a logical relationship (time sequence, causality, etc.), relevance strength, semantic hyponymy relationship, etc.

For example, as shown in FIG. 3, the attribute of the directed edge between the core node "movie A" and the core node "movie B" may be relevance strength, and the attribute of the directed edge between the label node "Zhao Liu" and the core node "Zhao Liu" may be relevance strength. The attribute of the directed edge between the core node "movie A" and the label nodes "Li Si", "Zhao Liu", "character A" and "well-known scene" is a semantic relationship. The attribute of the directed edge between the label node "Zhao Liu" and the content node "the stage photo of the character A.jpg" may be a semantic relationship.

According to one or more examples of the present application, the conversation library may include knowledge information of a second directed graph including nodes and one or more directed edges, for recording semantic information and characteristic thereof in the human-machine interaction process and providing reference for a plan for replying to the user input in the current human-machine interaction situation. An intention that a user prefers can be acquired by big data based on the conversation library, therefore, reasonable guide can be provided for the plan for replying to the user input. The second directed graph may be isomorphic to the first directed graph (for example, intention knowledge graph), referring to FIG. 3, which is not described in detail here. Therefore, by setting the directed graph where the conversation library is isomorphic to the intention knowledge graph, the conversation library and the intention knowledge graph can be effectively fused, thereby facilitating control of the knowledge information. It may be understood that other knowledge information may also adopt a data organization form of the second directed graph and is not limited to the conversation library. How to represent the knowledge information by the second directed graph is described herein by taking the conversation library as an example. By setting the directed graph where different knowledge information is isomorphic, the different knowledge information can be effectively fused, thereby facilitating control of the knowledge information.

According to one or more examples of the present application, a question-and-answer library may be question-and-answer knowledge information in the form of question-answer. The function of the question-and-answer library is to query the question-and-answer library for the question of the user and return an answer matched to the question so as to meet the information requirements of the user. For example, when the user input is a question-and-answer, whether there is an answer matched with the user input is preferentially queried from the question-and-answer library, so that reply can be realized rapidly.

The form of the question-and-answer library may be shown in the following table.

**Table 2 Form of the Question-and-Answer Library**

| **Key (question)** | **Value (answer)** |
|---|---|
| Occupied area of Liquan No. 1 High School | 150 mu |
| Birth time of Zhang Zhongjing | 150 A.D. |
| Pinyin of Ma Dao Cheng Gong | mǎ dào cheng go̅ng |
| Area of Qinghua Town | 91.59 square kilometers |
| Which dynasty is the emperor Li Shimin in | Tang Dynasty |
| The establishment time of the United Nations | 1945 |
| The invention time of stm | 1981 |
| Pinyin of Shu Jun | shu̅ ju̅n |
| Where is the brand Maxicare from | Los Angeles, USA |
| Author of *"Moonlight Decapitation"* | Mo Yan |
| Who is Tang Minghuang | Li Longji |
| Pinyin of Zhang Sheng Lei Dong | zhǎng she̅ng lei dong |

According one or more examples of the present application, the long-term memory information may include an intention knowledge graph, a conversation library and a question-and-answer library. The data content and the data organization form of the intention knowledge graph, the conversation library and the question-and-answer library of the long-term memory information are described above through examples, which are examples and do not serve as a limitation. Of course, the long-term memory information may also be other knowledge information combination relevant to the current human-machine interaction, which is not limited here.

The long-term memory information may perform language computing and information extraction. The language computing may include comparison, induction, deduction, inference and the like; and the information extraction, for example, may include concept extraction, entity extraction, event extraction, instruction extraction and the like, so that work memory information relevant to the current human-machine interaction content can be acquired from the long-term memory information based on the user input. The current human-machine interaction content may include the current user input and historical interaction information before the current user input. The work memory information may further include the current human-machine interaction content, so that a reply to the user input can be planned in the current human-machine interaction situation based on the current human-machine interaction history and the knowledge information relevant to the user input and achieved from the long-term memory information, which will be described in detail in the following content.

According to one or more examples of the present application, the work memory information may include information in the form of a third directed graph including nodes and one or more directed edges, and the third directed graph may be isomorphic to the above first directed graph (for example, the intention knowledge graph). Therefore, by setting that the work memory information includes information which is isomorphic to the knowledge information of the long-term memory information, invoking and fusion of the knowledge information can be facilitated. In an example, the third directed graph may be a part of the first directed graph relevant to the current human-machine interaction, thereby facilitating invoking and fusion of the knowledge information. That is, the third directed graph may include a core node and a label node, so that all user intentions and system replies (intentions) can be mapped to the core nodes and the relevant label nodes in the work memory information as many as possible, which is convenient for each module to use. In addition, since nothing other than extracting part of node information relevant to the current human-machine interaction from the long-term memory information is required, memory occupation may be reduced and the reply efficiency may be improved. The third directed graph may further include a content node supporting multimode semantic content, so that rich conversation content can be acquired based on the work memory information. It may be understood that the third directed graph may also be not isomorphic to the first directed graph.

According to one or more examples of the present application, the work memory information may further include semantic content and logical control information of all nodes relevant to the current human-machine interaction and taken from the first directed graph. That is, the core node of the third directed graph includes semantic content and logical control information of the first type of nodes corresponding to the first directed graph, the label node includes semantic content and logical control information of the second type of nodes corresponding to the first directed graph, and the content node includes semantic content and logical control information of the third type of nodes corresponding to the first directed graph. Therefore, the work memory information can obtain all chatable topics as many as possible from the long-term memory information based on the current human-machine interaction, so that a reply to the user input can be planned based on the work memory information. The data size in the work memory information is much less than the data size in the long-term memory information, so that the reply speed can be increased and the user experience can be improved.

According to one or more examples of the present application, when there is no node information corresponding to user input in the work memory information, knowledge information relevant to the user input may be acquired from the long-term memory information based on the user input to update the work memory information; and then a reply to the user input is planned in the current human-machine interaction situation based on the updated work memory information. According to one or more examples of the present application, a subgraph relevant to user input may be acquired from the first directed graph based on the user input, and the acquired subgraph is fused in the third directed graph of the work memory information to update the work memory information.

For the work memory information, in each node corresponding to the historical interaction information in the current human-machine interaction content, the semantic content and the logical control information of the core node may be retained, and the label node and the content node relevant to the core node may not be retained, so that the computing resource requirements can be reduced. Since the chatted topic probably won't be involved again, the semantic content and the logical control information of the core node corresponding to the historical interaction information in the current human-machine interaction are retained, which has little influence on the human-machine interaction.

According to one or more examples of the present application, the work memory information may further include first information for marking semantic content that has been involved in the current human-machine interaction, so that messages that have been talked and those that have not been talked can be distinguished, thus avoiding repetition. According to one or more examples of the present application, in the third directed graph, all nodes relevant to the semantic content that have been involved in the current human-machine interaction (including target nodes, label nodes and content nodes) may further include the first information to indicate that the node has been talked.

According to one or more examples of the present application, the work memory information may further include second information for indicating a conversation party who first mentioned the semantic content that has already been involved so as to accurately distinguish topics, of which the relevant content has been talked, thus accurately avoiding conversation repetition of the conversation party. According to one or more examples of the present application, in the third directed graph, all nodes relevant to the semantic content that have been involved in the current human-machine interaction (including target nodes, label nodes and content nodes) may further include the second information to indicate which conversation party has talked the node.

According to one or more examples of the present application, the work memory information may further include historical data of interaction record during the current human-machine interaction, so that the current human-machine interaction scene can be obtained, thereby providing decision-making features for multiple rounds of strategies.

The work memory information may further include other information, for example, the analysis result of each working module of the conversation control system, thereby being convenient for each module to use. For example, in addition to the knowledge information relevant to the user input acquired from the long-term memory information based on the user input, the work memory information may further include the result of sorting the knowledge information relevant to the user input acquired from the long-term memory information and a decision reply result.

According to one or more examples of the present application, in the step S103, the conversation control system processes the user input based on the information relevant to the user input, and the acquired processing result may include a plan for replying to the user input in the current human-machine interaction situation. Therefore, the relevant information can be fully utilized. Moreover, a reply to the user input is planned in the current human-machine interaction situation based on the relevant information, thus further making the human-machine interaction rich in content and clear in logic.

According to one or more examples of the present application, the conversation control system may further include a conversation understanding module and a conversation control module. In an example, firstly, the conversation understanding module may acquire relevant knowledge information from the long-term memory information based on the user input to update the work memory information; and then the conversation control module plans a reply to the user input in the current human-machine interaction situation based on the updated work memory information.

Based on this, in the step S103, that based on information relevant to the user input, the user input is processed by the conversation control system may include: the semantic content of the user input is analyzed; and a communicative intention of the user corresponding to the user input in the current human-machine interaction is analyzed. That is, the understanding result of the user input may include the semantic content and the communicative intention. The communicative intention, for example, may be one of intention systems, such as asking questions, clarifying, suggesting, rejecting, encouraging or comforting, etc.

As one exemplary example, the list of the intention systems may be shown in the following table.

**Table 3 List of the Intention Systems**

| | | | |
|---|---|---|---|
| 1 | Actively inform | 22 | Comfort |
| 2 | Ask questions | 23 | Clarify questions |
| 3 | Specific answer | 24 | Wish |
| 4 | Instruction | 25 | Goodbye |
| 5 | Suggestion | 26 | Accept commitments |
| 6 | Positive answer | 27 | Apology |
| 7 | Agree | 28 | Question type answer |
| 8 | Commitment | 29 | Partially accept action request |
| 9 | Confirm receipt of new type | 30 | Refuse to promise |
| 10 | Negative answer | 31 | Be modest |
| 11 | Disagree | 32 | Self-introduction |
| 12 | Emoticon | 33 | Respond to thanks |
| 13 | Plaint | 34 | Congratulation |
| 14 | Compliment | 35 | Discard |
| 15 | Accept action request | 36 | Self-correction |
| 16 | Refuse action request | 37 | Answer and ask questions |
| 17 | Thanks | 38 | Respond to apology |
| 18 | Correction | 39 | Partially accept commitments |
| 19 | Greeting | 40 | Withdraw |
| 20 | Avoid answering | 41 | Wait a moment |
| 21 | Encourage | | |

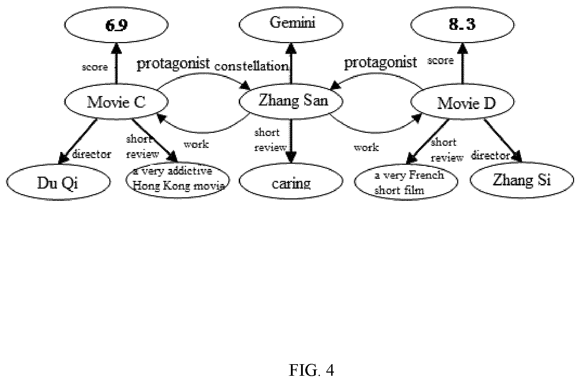

According to one or more examples of the present application, the user input may be understood based on the intention knowledge graph. For example, as shown in FIG. 4, the received first user input is: do you know who is the protagonist of movie C? The semantic content of the understanding result of the first user input is the movie C and the communicative intention is question-and-answer. The received second user input is: I like Zhang San very much (assuming Zhang San is an actor). The semantic content of the understanding result of the second user input is Zhang San and the communicative intention is chat.

The understanding result of the user input may further include a state intention for describing the state of a user, for example, the mood state of the user and whether the user likes the current chat. Therefore, a conversation decision can be made and the reply content can be planned according to the state intention of the user.

According to one or more examples of the present application, the communicative intention of the user input may be understood based on the trained intention neural network model. A first user input sample set may be obtained, and the communicative intention of the common user input sample in the first user input sample set may be manually labeled. The intention neural network model is trained by the first user input sample set. For example, the first user input sample set may be obtained based on log data (e.g., a search engine log). Low-frequency user input (e.g., "I don't know what you are talking about") may be obtained, and the communicative intention of the low-frequency user input may be manually labeled to generate a corpus. For the user input, the communicative intention of which cannot be identified by the intention neural network model, that is, the intention system has no corresponding communicative intention, low-frequency user input with the highest semantic similarity with the user input may be searched in the corpus, and the communicative intention corresponding to the searched low-frequency user input is taken as the communicative intention of the user input, so that the understanding of the communicative intention of the user input can be ensured.

The process of understanding the user input will be described in detail below with the intention knowledge graph.

According to one or more examples of the present application, that the semantic content of the user input is analyzed in the step S103 may include: whether the user input can correspond to a certain node in the work memory information is determined; and in response to the user input can correspond to the certain node in the work memory information, the user input is processed based on the work memory information, so that the semantic content of the user input can be understood based on the work memory information, thus understanding the user input in the current human-machine interaction situation and improving the accuracy and efficiency of conversation understanding. The certain node, for example, may be a node of the third directed graph. As described above, the third directed graph may be isomorphic to the first directed graph (intention knowledge graph) and be a part of the first directed graph.

According to one or more examples of the present application, that the user input is processed may include: relevant content is supplemented for the user input based on information of the certain point in the work memory information. For example, the user input is "who is the protagonist". The user input may be complemented as "who is the protagonist of movie A" based on a certain core node "movie A" corresponding to the user input found from the work memory information. According to one or more examples of the present application, the previous core node in the work memory information corresponding to the current human-machine interaction content may be searched, and the determining is performed as follows: whether the user input is overlaid by a label in the logical control information of the previous core node, if so, relevant content is supplemented for the user input according to the previous node. The label in the logical control information of the previous core node "movie A" includes: an actor, a character, a director and a scene. Since the semantic meanings of "protagonist" and "actor" are the same, it is determined that the user input is overlaid by the label of the core node "movie A", and the user input is complemented as "who is the protagonist of movie A" according to the core node "movie A".

The semantic content of the user input may be further analyzed based on the complemented user input so as to improve the accuracy of conversation understanding.

According to one or more examples of the present application, in response to the user input cannot correspond to the node in the work memory information, information of a node relevant to the user input may be extracted from the long-term memory information and be stored in the work memory information, thus expanding a knowledge range (for example, based on the whole intention graph) and trying to understand the user input based on the knowledge information when the user input is not overlaid by the knowledge information in the work memory information.

According to one or more examples of the present application, in the step S103, that the semantic content of the user input is analyzed may include: the user input is disambiguated. For example, the user input is "I love reading *The Water Margin",* wherein *"The Water Margin"* obtained after word segmentation is ambiguous, which may be a TV series or a novel. Therefore, disambiguating the user input is needed to determine the type of "Water Margin", so that the semantic content of the user input can be accurately understood.

The semantic content of the user input may be further analyzed based on the disambiguation result, thereby improving the accuracy of conversation understanding.

According to one or more examples of the present application, that the user input is disambiguated may include: based on node information relevant to the current human-machine interaction in the user input and the work memory information, at least part of content with ambiguity in the user input is identified and the meaning of the at least part of content in the current human-machine interaction situation is determined, so that the user input can be disambiguated based on the current human-machine interaction situation. For example, if the user input is "I love reading *The Water Margin"* and since *"The Water Margin"* may refer to a novel and may also refer to a TV series, *"The Water Margin"* is ambiguous. In this case, the system determines that the true meaning of *"The Water Margin"* in the current context should refer to a novel, not a TV series through "reading" in the user input. As an exemplary example, the user input may be disambiguated based on the user input and the previous core node (which may be the latest updated core node in the work memory information and include semantic content and logical control information) corresponding to the current human-machine interaction in the work memory information. For example, the user input and the previous core node corresponding to the current human-machine interaction content in the work memory information may be input into a disambiguation neural network model so as to obtain the type of at least part of content with ambiguity in the user input output by the disambiguation neural network model. The disambiguation neural network model may be subjected to measurement training by a type corpus, so that the user input can be combined with the information of the node relevant to the current human-machine interaction in the work memory information to be closer to the corresponding type in the type corpus, thus outputting at least part of content with ambiguity in the user input and the type of the at least part of content with ambiguity. Here, it is an example, but not a limitation, to illustrate how to determine the at least part of content with ambiguity in the user input and the type of the at least part of content with ambiguity.

It may be understood that it is not limited here that the disambiguation cannot be performed without performing according to the work memory information, for example, the user input may be disambiguated based on a conversation library in the long-term memory information. For example, in the conversation library, if the input "I love *The Water Margin"* is more inclined to the reading intention, the type of *"The Water Margin"* may be determined as a novel.

According to one or more examples of the present application, in the step S103, that the semantic content of the user input is analyzed may include: disambiguation and information complementation. The semantic content of the user input may be further analyzed based on the disambiguation result and the complemented user input so as to improve the accuracy of conversation understanding.

The subsequent operation may be decided based on a communicative intention. For example, the communicative intention is query, and an intention query expression may be generated based on the disambiguation result, the complemented user input and the communicative intention. If the communicative intention is to say goodbye according to the intention expression, querying relevant knowledge information is not needed. When searching the relevant knowledge information is needed, whether there is knowledge information relevant to the user input may be first searched in the work memory information, if not, whether there is knowledge information relevant to the user input is continuously searched in the long-term memory information.

According to one or more examples of the present application, the step S103 may further include: information of relevant nodes of the user input may be queried from the work memory information according to the semantic content of the user input and the communicative intention corresponding to the user input in the current human-machine interaction; and the queried relevant nodes of the user input are sorted according to the degree of relevance with the user input, wherein the sorting is performed based on the logical control information of the relevant nodes. For example, scoring may be performed based on popularity or timeliness, etc. to determine the degree of relevance between the relevant nodes and the user input, so that conversation decision can be made according to the degree of relevance of the relevant nodes with the user input, and relevance between a reply generated by the conversation system and the user input can be realized.

According to one or more examples of the present application, different scores are assigned to the relevant nodes according to the degree of relevance with the user input, so that reference can be provided for conversation decision. For example, the score relevant to the user input may be added to the logical control information of the core node of the third directed graph in the work memory information.

The semantic content of the user input obtained through analysis, for example, may be a core node relevant to the user input in the third directed graph.

According to one or more examples of the present application, under the condition that different scores are assigned to the relevant nodes according to the degree of relevance with the user input, a plan for replying to the user input in the current human-machine interaction situation may include: according to the sorting result, a conversation target is planned and node information with the highest degree of relevance with the user input is selected as the conversation content of the plan; and the conversation content of the play and the conversation target are integrated to serve as second input and the second input is provided for the neural network system, so that knowledge information can be integrated into the conversation system and a reply is planned according to the user input, thereby making the conversation logic clear.

It may be understood that the degree of relevance between the relevant nodes and the user input may be obtained based on the logical control information of the node in the intention knowledge graph, the degree of relevance between the relevant nodes and the user input may also be obtained based on the conversation library, and the degree of relevance between the relevant nodes and the user input may also be obtained based on user preferences, which are not limited herein as long as the degree of relevance between the relevant nodes and the user input can be obtained from the knowledge information. The preference of the user may be obtained based on the current human-machine interaction content and the historical human-machine interaction content of the user. For example, the user is involved in reading in multiple human-machine interaction, so it may be determined that the user likes reading, and the conversation content may be planed according to the preference of the user in the conversation decision making process.

According to one or more examples of the present application, when there is no knowledge information corresponding to user input in the work memory information, relevant knowledge information may be acquired from the long-term memory information based on the semantic content of the user input to update the work memory information; and then a reply to the user input is planned in the current human-machine interaction situation based on the semantic content and communicative intention of the user input and the updated work memory information.

For example, as shown in FIG. 4, the received first user input is: do you know who is the protagonist of movie C? The semantic content of the understanding result of the first user input is the movie C and the communicative intention is question-and-answer. Information relevant to the movie C may be acquired from the long-term memory information according to the understanding result of the first user input and may be added to the work memory information to update the work memory information. That is, a node unit where the core node "movie C" is located in FIG. 4 is added to the work memory information to update the work memory information. Then a reply to the first user input is planned according to the communicative intention and information relevant to the core node "movie C" in the work memory information. For example, a first conversation target may be planned as question-and-answer, and first conversation content may be planned as that "Zhang San" is the protagonist. The neural network system generates "Zhang San" as an answer based on the first user input as well as the integration result of the first conversation target plan and the first conversation content plan.

Then, the received second user input is: I like Zhang San very much. The semantic content of the understanding result of the second user input is Zhang San and the communicative intention is chat. If it is determined that relevant information about "Zhang San" is not stored in the work memory at this time, information relevant to "Zhang San" may be acquired from the long-term memory information according to the understanding result of the second user input and may be added to the work memory information to update the work memory information. That is, a node unit where the core node "Zhang San" is located in FIG. 4 is added to the work memory information to update the work memory information; and then a reply to the second user input is planned according to the communicative intention and the information relevant to "Zhang San" in the work memory information. For example, a second conversation target may be planned as chat, and second conversation content may be planned as "caring". The neural network system generates "she is very caring" as an answer based on the second user input as well as the integration result of the second conversation target plan and the second conversation content plan.

If there is no relevant knowledge information about the user input in the long-term memory information, a reply is planned as empty. The neural network system generates an answer based on the user input.

After chat with a set number of rounds (such as two rounds or three rounds), a conversation target may be planned as recommendation, and knowledge information of other nodes with higher degree of relevance is recommended based on the previous core node corresponding to the current human-machine interaction content in the work memory information, so that knowledge points can be actively switched after many chats, thereby avoiding an awkward conversation.

For example, in the above example, the received third user input is: in addition to caring, she is also talented. The communicative intention is chat. Then, a reply to the third user input is planned according to the communicative intention and other nodes with higher degree of relevance with the previous core node "Zhang San" corresponding to the current human-machine interaction content in the work memory information. For example, a third conversation target may be planned as recommendation, and then information of other nodes with higher degree of relevance with the core node "Zhang San" may be acquired from the long-term memory information according to the previous core node "Zhang San" corresponding to the current human-machine interaction content in the work memory information. For example, a core node "movie D" with higher popularity may be acquired. Based on this, third conversation content may be planned as "movie D" and "a very French short film". The neural network system generates "recommend a movie D starring Zhang San, a very French short film" as an answer based on the third user input as well as the integration result of the third conversation target plan and the third conversation content plan.

Based on this, according to one or more examples of the present application, when the work memory information is not updated for the user input, in response to the node with the highest degree of relevance still cannot meet a predetermined standard (for example, the score of each piece of candidate reply content does not reach a predetermined threshold), the long-term memory information is re-queried to update the work memory information, so that chat knowledge points can be actively recommended or switched to avoid an awkward conversation.

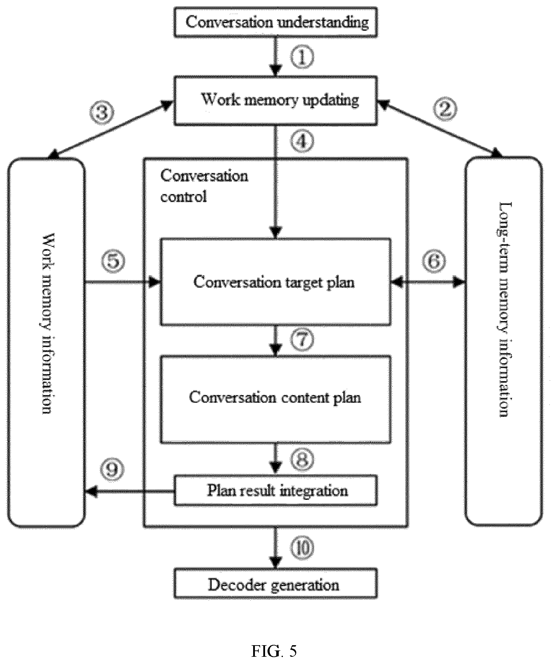

The human-machine interaction method based on the neural network is described below according to an exemplary example. FIG. 5 shows a schematic diagram of a working process of a conversation control system according to the exemplary example, wherein arrows indicate directions of signal flow, and CD, ②, ...⑪ indicate the steps of the method.

As shown in FIG. 5, after the current user input is received, the current user input is subjected to conversation understanding to acquire the communicative intention and the semantic content of the current user input, and information of relevant nodes of the current user input is acquired from the long-term memory information in the current human-machine interaction situation according to the communicative intention and the semantic content; the obtained relevant nodes may be subjected to relevance scoring according to the degree of relevance, then sorting is performed based on the relevance scores, the relevance scores are added to the logical control information of the relevant nodes and are integrated into the work memory information to update the work memory information; historical interaction data of the current human-machine interaction and information of the relevant nodes of the current user input are acquired from the work memory information, and conversation control which includes a conversation target plan and a conversation content plan is performed, and if the planned conversation target, for example, is active recommendation, information of other nodes with higher degree of relevance with the current user input may be acquired from the long-term memory information to actively recommend knowledge chat; the planned conversation target and conversation content are integrated and provided for a decoder of the neural network system; and the decoder generates a reply to the current user input according to the integration of the planned conversation target and conversation content as well as an implicit vector which is acquired by encoding the current user input and the stored historical interaction information of the current human-machine interaction.

According to another aspect of the present disclosure, as shown in FIG. 2, a human-machine interaction device based on a neural network is provided. The human-machine interaction device based on the neural network includes: a neural network system 101, configured to receive user input as first input; a conversation control system 102 different from the neural network system, configured to receive the user input, wherein the conversation control system 102 is further configured to process the user input based on information relevant to the user input and provide the processing result as second input for the neural network system; and the neural network system is further configured to generate a reply to the user input based on the first and second input.

The neural network system may be, but not limited to an end-to-end neural network system 101. The end-to-end neural network system 101 may include an encoder 1011 and a decoder 1012. The encoder 1011 may implicitly represent the input text content to generate a vector; and the decoder 1012 may generate a fluent natural language text according to a given input vector.

According to one or more examples of the present application, the encoder 1011 may be configured to receive the user input and the stored historical interaction information of the current human-machine interaction and encode the user input and the stored historical interaction information of the current human-machine interaction to generate an implicit vector, and the implicit vector is input to the decoder 1012. The decoder 1012 may be configured to receive the second input (that is, the processing result obtained by processing the user input by the conversation control system) and the implicit vector generated by the encoder 1011, and generate the reply to the user input. Therefore, the neural network system can generate a reply to the user input based on the current user input, the stored historical interaction information of the current human-machine interaction and the result obtained by processing the user input by the conversation control system based on the information relevant to the user input, thereby further ensuring that the reply content of the machine is in line with the current human-machine interaction scene and the conversation logic is clear.

The end-to-end neural network system, for example, may adopt a Transformer neural network system or a UniLM neural network system.

According to one or more examples of the present application, the device may further include a storage and computing system 103. The storage and computing system 103 may include a long-term memory module 1031 and a work memory module 1032. In this case, the information relevant to the user input may include long-term memory information which is taken from the long-term memory module as well as work memory information which is taken from the work memory module and is valid only during the current human-machine interaction. The long-term memory information may be information that the conversation system needs to store for a long time, and may include various kinds of knowledge information, for example, may include at least one of the followings: common sense, domain knowledge, language knowledge, a question-and-answer library and a conversation library. The work memory information may be acquired from the long-term memory information based on the current human-machine interaction content. That is, the work memory information is knowledge information relevant to the current human-machine interaction content. Therefore, the knowledge information relevant to the current human-machine interaction information content can be integrated into the conversation system based on the neural network system, a reply to the user input is planned in the current human-machine interaction situation based on the relevant knowledge information, and the knowledge information is fully utilized, so that the human-machine interaction has rich content and clear logic. It may be understood that the information relevant to the user input may also include information captured from the network in real time, which is not limited here.

According to one or more examples of the present application, the long-term memory information may include, but is not limited to, an intention knowledge graph, a question-and-answer library and a conversation library. The data content, the data organization form and the like of the intention knowledge graph, the question-and-answer library and the conversation library will be first described below.

The intention knowledge graph can start from the knowledge interaction need of the conversation scene, which not only meets the knowledge query function, but also meets association, analogy, prediction and the like in multiple rounds of multi-scene interaction. The nodes of the intention knowledge graph are organized orderly, which is convenient for text calculation and control of the knowledge information. Behavior skip (scene skip and content skip in the same scene) in the conversation can be supported by calculating the knowledge information, and strong semantic transfer logic is achieved. The intention knowledge graph integrates different types of multi-scene information and can provide the ability to understand language from multiple perspectives.

According to one or more examples of the present application, an intention knowledge graph is stored in the long-term memory module 1031, the intention knowledge graph may include knowledge information in the form of a first directed graph including nodes and one or more directed edges, and the nodes in the first directed graph are structured data including semantic information and logical control information. The directed edge in the first directed graph represents a relevance attribute between the relevant nodes, and a relevance attribute between the nodes and the corresponding logical control information. It may be understood that other knowledge information may also adopt a data organization form of the first directed graph and is not limited to the intention knowledge graph. How to represent the knowledge information by the first directed graph is described herein by taking the intention knowledge graph as an example.

According to one or more examples of the present application, the logical control information of the intention knowledge graph may include information for screening nodes relevant to the current human-machine interaction, for example, popularity, timeliness, emotion, etc. for screening the nodes relevant to the current human-machine interaction content, so that the relevant knowledge information can be retrieved when the user actively initiates knowledge chat, and the conversation content has clear logic. For example, a first popularity threshold may be set, and a node with a popularity greater than the first popularity threshold in the corresponding logical control information may be screened out from the nodes relevant to the current human-machine interaction content in the work memory information. A first effective time point may be set, and a node with timeliness information after the first effective time point in the corresponding logical control information is screened out from the nodes relevant to the current human-machine interaction content in the work memory information. A first preset emotion type may be set, and a node with an emotion type being the first preset emotion type in the corresponding logical control information is screened out from the nodes relevant to the current human-machine interaction content.

According to one or more examples of the present application, the logical control information of the intention knowledge graph may further include information for determining the degree of relevance between the nodes in the current human-machine interaction, for example, popularity, a relevance relationship between the nodes, etc. for expanding the nodes relevant to the current human-machine interaction content, so that the machine can actively switch, trigger or recommend knowledge chat, thereby making the conversation rich and avoiding an awkward conversation. For example, a second popularity threshold may be set, and a node with a popularity greater than the second popularity threshold in the corresponding logical control information may be acquired from each relevant node of the user input in the long-term memory information. The current node may be expanded to the node with the highest degree of relevance with the current node according to the relevance relationship.

The nodes of the intention knowledge graph may include a plurality of different types of nodes. According to one or more examples of the present application, nodes in the first directed graph may include a first type of nodes and a second type of nodes. The semantic content of one of the second type of nodes may be a part of the semantic content of one or more the first type of nodes relevant to the one of the second type of nodes, and the logical control information of the one of the second type of nodes includes at least one of the followings: the popularity of the one of the second type of nodes under the one or more first type of nodes relevant to the one of the second type of nodes, a relevance skip relationship between the one of the second type of nodes and at least one of other second type of nodes, and a subtype of the one of the second type of nodes. Therefore, knowledge information of the one or more second type of nodes relevant to the semantic meaning of the one of the first type of nodes may be acquired by querying the one of the first type of nodes, thereby facilitating text calculation and control of the knowledge information.

The first type of nodes, for example, may be core nodes. The second type of nodes, for example, may be label nodes. The directed edge may represent a relevance attribute between the core nodes, and a relevance attribute between core nodes and the label node. The core node and the label node may be structured data, so that the semantic content can be understood and controlled. Each core node may be a basic unit with semantic integrity, and may include an entity, a concept, an event and an instruction, for example, may be people, an article, a structure, a product, a building, a place, an organization, an event, an artistic work, a scientific technology, scientific dogma, etc. The logical control information of the core node may include popularity, timeliness, all labels for recalling the label nodes, a task API, etc. Each core node may include a plurality of relevant label nodes. The semantic content of the label nodes may be a part of the semantic content of the core nodes relevant to the label nodes, and the label nodes and the core nodes have a partial and integral relationship.

According to one or more examples of the present application, the information relevant to the current human-machine interaction may include node information relevant to the user input and acquired from the first directed graph. The user input may be mapped to the core nodes of the first directed graph, and the core nodes acquired through mapping and the label nodes relevant to the core nodes acquired through mapping may serve as knowledge information relevant to the user input. If the user input cannot be mapped to the core nodes of the first directed graph, and the core node acquired through mapping of historical user input of the current human-machine interaction may serve as the core node of the current user input. For example, if the current user input is "who is the protagonist?", the current user input has no corresponding core node in the first directed graph. In this case, the corresponding core node in the first directed graph last time in the current human-machine interaction may serve as the core node of the current user input so as to acquire knowledge information relevant to the current user input. The current human-machine interaction content may include the current user input and the historical interaction information of the current human-machine interaction.

As shown in FIG. 3, a solid circle ("movie A", "movie B" and "Zhao Liu") indicates the core node, a solid ellipse indicates the label node, and a dotted circle indicates logical control information. Each dotted ellipse may surround a node unit as an information unit relevant to the user input. That is, when the user input is mapped to the core node of one node unit (the node unit 100 in FIG. 3), all node information of the node unit is considered as knowledge information relevant to the user input and is added into the work memory information. It should be noted that according to the size of the available computing resource of the system, the node unit where at least one of other core nodes relevant to one core node acquired through mapping is located may be considered to be relevant to the user input and is added to the work memory information, which is not limited here. The technical solutions of the present disclosure are specifically described by taking the case where the node unit where the core nodes acquired through mapping is located serves as knowledge information relevant to the user input as an example.

By taking the case where the first type of node (core node) is a movie entity "movie A" as an example, the labels for a "movie A" user to recall the label node may include actors, characters, directors, scenes, etc. The label nodes (the second type of nodes) relevant to the first type of node may include "Zhao Liu", "character A", "character B", "Li Si" and "well-know scene". The label node "Zhao Liu" corresponds to an actor label of the relevant first type of node "movie A", "character A" and "character B" correspond to a character label of the relevant first type of node "movie A", "Li Si" corresponds to a director label of the relevant first type of node "movie A", and the well-known scene" corresponds to a scene label of the relevant first type of node "movie A". The core node relevant to the core node "movie A" may include "movie B", and the core node relevant to the label node "Zhao Liu" may include "Zhao Liu". When the user input is mapped to the core node "movie A", the core node "movie A" and the label nodes "Zhao Liu", "character A", "character B", "Li Si" and "well-know scene" may serve as information relevant to the user input.

According to one or more examples of the present application, each of nodes in the first directed graph may further include a third type of nodes, the semantic content of the third type of nodes supports multi-mode content, and the logical control information of one of the third type of nodes may include at least one of the followings: information of one or more second type of nodes relevant to the one of the third type of nodes and information for representing the semantic content of the one of the third type of nodes. Therefore, by setting the third type of nodes, the multi-mode semantic content can be supported and the conversation content can be enriched.

The third type of nodes, for example, may be content nodes. The directed edge may further represent a relevance attribute between a label node (one of the second type of nodes) and a content node. The content nodes may be unstructured data and can support rich multi-mode content. Each of the core nodes (the first type of nodes) may include a plurality of content nodes, and the label nodes relevant to the content nodes may be subjects or summaries of the content nodes. The content nodes may include conversation content and have the characteristics of multiple modes (which may be words, sentences, pictures, videos, etc.), diversity, fine granularity, etc. The logical control information of one of the content nodes, for example, may include core labels, keywords, degree of importance of the core labels in the semantic content of the content nodes, general phrases of the semantic content of the content nodes, types of the label nodes relevant to the content nodes, emotional polarity of the label nodes relevant to the content nodes, scores of the label nodes relevant to the content nodes, etc.

According to one or more examples of the present application, the information relevant to the current human-machine interaction content may include node information relevant to the user input and acquired from the first directed graph. The user input may be mapped to the core nodes of the first directed graph. The core nodes acquired through mapping, the label nodes relevant to the core nodes acquired through mapping and the content labels relevant to the acquired label nodes may serve as information relevant to the user input.

As shown in FIG. 3, a rectangular frame indicates the content node. By taking the case where one of the first type of nodes (core node) is the movie entity "movie A" as an example, the label nodes (second type of nodes) relevant to the one of the first type of nodes may include "Zhao Liu", "character A", "character B", "Li Si" and "well-know scene". The content nodes relevant to the label node "Zhao Liu" and the label node "character A" may include "the stage photo of the character A.jpg". The content nodes relevant to the label node "character A" may further include "the character A has extremely complete vitality and will to live". The content nodes relevant to the label node "Li Si" may include: the movie A is the pinnacle of work of martial arts of the director Li Si. When the user input is mapped to the core node "movie A", the core node "movie A" and the label nodes "Zhao Liu", "character A", "character B", "Li Si" and "well-know scene" and the content nodes relevant to the label nodes "Zhao Liu", "character A" and "Li Si) may serve as information relevant to the user input.

The two nodes being relevant to each other may refer to that the two nodes may be related by a directed path including at least one directed edge. Different nodes may be connected through the one or more directed edges, and a relevance attribute between the connected nodes is indicated. The one or more directed edges, for example, may include a relevant edge from the core node to the core node, a relevant edge from the core node to the label node, a relevant edge from the label node to the core node and a relevant edge from the label node to the content node. An attribute of the directed edge may include a semantic relationship (such as director, work, wife, etc.), a logical relationship (time sequence, causality, etc.), relevance strength, semantic hyponymy relationship, etc.

For example, as shown in FIG. 3, the attribute of the directed edge between the core node "movie A" and the core node "movie B" may be relevance strength, and the attribute of the directed edge between the label node "Zhao Liu" and the core node "Zhao Liu" may be relevance strength. The attribute of the directed edge between the core node "movie A" and the label nodes "Li Si", "Zhao Liu", "character A" and "well-know scene" is a semantic relationship. The attribute of the directed edge between the label node "Zhao Liu" and the content node "the stage photo of the character A.jpg" may be a semantic relationship.

According to one or more examples of the present application, a conversation library may be stored in the long-term memory module 1031, the conversation library may include a second directed graph in the form of including nodes and one or more directed edges, for recording semantic information and characteristic thereof in the human-machine interaction process and providing reference for a plan for replying to the user input in the current human-machine interaction situation. An intention that a user prefers can be acquired by big data based on the conversation library, therefore, reasonable guide can be provided for the plan for replying to the user input. The second directed graph may be isomorphic to the first directed graph (for example, intention knowledge graph), referring to FIG. 3, which is not described in detail here. Therefore, by setting the directed graph where the conversation library is isomorphic to the intention knowledge graph, the conversation library and the intention knowledge graph can be effectively fused, thereby facilitating control of the knowledge information. It may be understood that other knowledge information may also adopt a data organization form of the second directed graph and is not limited to the conversation library. How to represent the knowledge information by the second directed graph is described herein by taking the conversation library as an example. By setting the directed graph where different knowledge information is isomorphic, the different knowledge information can be effectively fused, thereby facilitating control of the knowledge information.

According to one or more examples of the present application, a question-and-answer library may question-and-answer knowledge information in the form of question-answer. The function of the question-and-answer library is to query the question-and-answer library for the question of the user and return an answer matched to the question so as to meet the information requirements of the user. For example, when the user input is a question-and-answer, whether there is an answer matched with the user input is preferentially queried from the question-and-answer library, so that reply can be realized rapidly.

According one or more examples of the present application, the long-term memory information stored in the long-term memory module may include an intention knowledge graph, a conversation library and a question-and-answer library. The data content and the data organization form of the intention knowledge graph, the conversation library and the question-and-answer library of the long-term memory information are described above through examples, which are examples and do not serve as a limitation. Of course, the long-term memory information may also be other knowledge information combination relevant to the current human-machine interaction, which is not limited here.

The long-term memory information may perform language computing and information extraction. The language computing may include comparison, induction, deduction, inference and the like; and the information extraction, for example, may include concept extraction, entity extraction, event extraction, instruction extraction and the like, so that work memory information relevant to the current human-machine interaction content can be acquired from the long-term memory information based on the user input. The current human-machine interaction content may include the current user input and historical interaction information before the current user input. The work memory information may further include the current human-machine interaction content, so that a reply to the user input can be planned in the current human-machine interaction situation based on the current human-machine interaction history and the knowledge information relevant to the user input and achieved from the long-term memory information, which will be described in detail in the following content.

According one or more examples of the present application, work memory information may be stored in the work memory module 1032. The work memory information includes information in the form of a third directed graph including nodes and one or more directed edges, and the third directed graph may be isomorphic to the above first directed graph (for example, the intention knowledge graph). Therefore, by setting that the work memory information includes information which is isomorphic to the knowledge information of the long-term memory information, invoking and fusion of the knowledge information can be facilitated. In an example, the third directed graph may be a part of the first directed graph relevant to the current human-machine interaction, thereby facilitating invoking and fusion of the knowledge information. That is, the third directed graph may include a core node and a label node, so that all user intentions and system replies (intentions) can be mapped to the core nodes and the relevant label nodes in the work memory information as many as possible, which is convenient for each module to use. In addition, since nothing other than extracting part of node information relevant to the current human-machine interaction from the long-term memory information is required, memory occupation may be reduced and the reply efficiency may be improved. The third directed graph may further include a content node supporting multimode semantic content, so that rich conversation content can be acquired based on the work memory information. It may be understood that the third directed graph may also be not isomorphic to the first directed graph.

According to one or more examples of the present application, the work memory information may further include semantic content and logical control information of all nodes relevant to the current human-machine interaction and taken from the first directed graph. That is, the core node of the third directed graph includes semantic content and logical control information of the first type of nodes corresponding to the first directed graph, the label node includes semantic content and logical control information of the second type of nodes corresponding to the first directed graph, and the content node includes semantic content and logical control information of the third type of nodes corresponding to the first directed graph. Therefore, the work memory information can obtain all chatable topics as many as possible from the long-term memory information based on the current human-machine interaction, so that a reply to the user input can be planned based on the work memory information. The data size in the work memory information is much less than the data size in the long-term memory information, so that the reply speed can be increased and the user experience can be improved.

According to one or more examples of the present application, when there is no node information corresponding to user input in the work memory information, knowledge information relevant to the user input may be acquired from the long-term memory information based on the user input to update the work memory information; and then a reply to the user input is planned in the current human-machine interaction situation based on the updated work memory information. According to one or more examples of the present application, a subgraph relevant to user input may be acquired from the first directed graph based on the user input, and the acquired subgraph is fused in the third directed graph of the work memory information to update the work memory information.

For the work memory information, in each node corresponding to the historical interaction information in the current human-machine interaction content, the semantic content and the logical control information of the core node may be retained, and the label node and the content node relevant to the core node may not be retained, so that the computing resource requirements can be reduced. Since the chatted topic probably won't be involved again, the semantic content and the logical control information of the core node corresponding to the historical interaction information in the current human-machine interaction are retained, which has little influence on the human-machine interaction.

According to one or more examples of the present application, the work memory information may further include first information for marking semantic content that has been involved in the current human-machine interaction, so that messages that have been talked and those that have not been talked can be distinguished, thus avoiding repetition. According to one or more examples of the present application, in the third directed graph, all nodes relevant to the semantic content that have been involved in the current human-machine interaction (including target nodes, label nodes and content nodes) may further include the first information to indicate that the node has been talked.

According to one or more examples of the present application, the work memory information may further include second information for indicating a conversation party who first mentioned the semantic content that has already been involved so as to accurately distinguish topics, of which the relevant content has been talked, thus accurately avoiding conversation repetition of the conversation party. According to one or more examples of the present application, in the third directed graph, all nodes relevant to the semantic content that have been involved in the current human-machine interaction (including target nodes, label nodes and content nodes) may further include the second information to indicate which conversation party has talked the node.

According to one or more examples of the present application, the work memory information may further include historical data of interaction record during the current human-machine interaction, so that the current human-machine interaction scene can be obtained, thereby providing decision-making features for multiple rounds of strategies.

The work memory information may further include other information, for example, the analysis result of each working module of the conversation control system, thereby being convenient for each module to use. For example, in addition to the knowledge information relevant to the user input acquired from the long-term memory information based on the user input, the work memory information may further include the result of sorting the knowledge information relevant to the user input acquired from the long-term memory information and a decision reply result.

According to one or more examples of the present application, the conversation control system may be configured to perform the following step to process the user input: a reply to the user input is planned in the current human-machine interaction situation. Therefore, the relevant information can be fully utilized. Moreover, a reply to the user input is planned in the current human-machine interaction situation based on the relevant information, thus further making the human-machine interaction rich in content and clear in logic.

According to one or more examples of the present application, the conversation control system 102 may further include a conversation understanding module 1021 and a conversation control module 1022. In an example, firstly, the conversation understanding module 1021 may acquire relevant knowledge information from the long-term memory information based on the user input to update the work memory information; and then the conversation control module 1022 plans a reply to the user input in the current human-machine interaction situation based on the updated work memory information.

The conversation understanding module 1021 may be configured to analyze the semantic content of the user input, and analyze a communicative intention of the user corresponding to the user input in the current human-machine interaction. That is, the understanding result of the user input may include the semantic content and the communicative intention. The communicative intention, for example, may select one of intention systems, such as asking questions, clarifying, suggesting, rejecting, encouraging or comforting, etc.

According to one or more examples of the present application, the user input may be understood based on the intention knowledge graph. For example, as shown in FIG. 4, the received first user input is: do you know who is the protagonist of movie C? The semantic content of the understanding result of the first user input is the movie C and the communicative intention is question-and-answer. The received second user input is: I like Zhang San very much. The semantic content of the understanding result of the second user input is Zhang San and the communicative intention is chat.

The understanding result of the user input may further include a state intention for describing the state of a user, for example, the mood state of the user and whether the user likes the current chat. Therefore, a conversation decision can be made and the reply content can be planned according to the state intention of the user.

According to one or more examples of the present application, the communicative intention of the user input may be understood based on the trained intention neural network model. A first user input sample set may be obtained, and the communicative intention of the common user input sample in the first user input sample set may be manually labeled. The intention neural network model is trained by the first user input sample set. For example, the first user input sample set may be obtained based on log data (e.g., a search engine log). Low-frequency user input (e.g., "I don't know what you are talking about") may be obtained, and the communicative intention of the low-frequency user input may be manually labeled to generate a corpus. For the user input, the communicative intention of which cannot be identified by the intention neural network model, that is, the intention system has no corresponding communicative intention, low-frequency user input with the highest semantic similarity with the user input may be searched in the corpus, and the communicative intention corresponding to the searched low-frequency user input is taken as the communicative intention of the user input, so that the understanding of the communicative intention of the user input can be ensured.

The process of understanding the user input will be described in detail below with the intention knowledge graph.

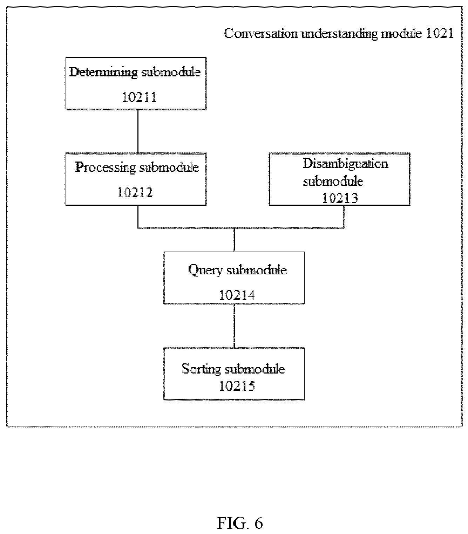

According to one or more examples of the present application, as shown in FIG. 6, the conversation understanding module 1021 may include: a determining submodule 10211, configured to determine whether the user input can correspond to a certain node in the work memory information; and a processing submodule 10212, configured to, in response to the user input can correspond to the certain node in the work memory information, process the user input based on the work memory information, so that the semantic content of the user input can be understood based on the work memory information, thus understanding the user input in the current human-machine interaction situation and improving the accuracy and efficiency of conversation understanding. The certain node, for example, may be a node of the third directed graph. As described above, the third directed graph may be isomorphic to the first directed graph (intention knowledge graph) and be a part of the first directed graph.

According to one or more examples of the present application, the processing submodule 10212 is further configured to supplement relevant content for the user input based on information of the certain node in the work memory information. For example, the user input is "who is the protagonist". The user input may be complemented as "who is the protagonist of movie A" based on a certain core node "movie A" corresponding to the user input found from the work memory information. According to one or more examples of the present application, the previous core node in the work memory information corresponding to the current human-machine interaction content may be searched, and the determining is performed as follows: whether the user input is overlaid by a label in the logical control information of the previous core node, if so, relevant content is supplemented for the user input according to the previous node. The label in the logical control information of the previous core node "movie A" includes: an actor, a character, a director and a scene. Since the semantic meanings of "protagonist" and "actor" are the same, it is determined that the user input is overlaid by the label of the core node "movie A", and the user input is complemented as "who is the protagonist of movie A" according to the core node "movie A".

The semantic content of the user input may be further analyzed based on the complemented user input so as to improve the accuracy of conversation understanding.

According to one or more examples of the present application, the conversation understanding module may be further configured to, in response to the user input cannot correspond to the node in the work memory information, extract information of a node relevant to the user input from the long-term memory information and store the information in the work memory information, thus expanding a knowledge range (for example, based on the whole intention graph) and trying to understand the user input based on the knowledge information when the user input is not overlaid by the knowledge information in the work memory information.

According to one or more examples of the present application, the conversation understanding module 1021 may further include: a disambiguation submodule 10213, configured to disambiguate the user input. For example, the user input is "I love *The Water Margin",* wherein *"The Water Margin"* obtained after word segmentation is ambiguous, which may be a TV series or a novel. Therefore, disambiguating the user input is needed to determine the type of *"The Water Margin",* so that the semantic content of the user input can be accurately understood.

The semantic content of the user input may be further analyzed based on the disambiguation result, thereby improving the accuracy of conversation understanding.

According to one or more examples of the present application, the disambiguation submodule 10213 may be further configured to, based on node information relevant to the current human-machine interaction in user input and the work memory information, identify at least part of content with ambiguity in the user input and determine the meaning of the at least part of content in the current human-machine interaction situation. Therefore, the user input can be disambiguated based on the current human-machine interaction situation. For example, if the user input is "I love reading *The Water Margin"* and since *"The Water Margin"* may refer to a novel and may also refer to a TV series, *"The Water Margin"* is ambiguous. In this case, the system determines that the true meaning of *"The Water Margin"* in the current context should refer to a novel, not a TV series through "reading" in the user input. As an exemplary example, the user input may be disambiguated based on the user input and the previous core node (which may be the latest updated core node in the work memory information and include semantic content and logical control information) corresponding to the current human-machine interaction in the work memory information. For example, the user input and the previous core node corresponding to the current human-machine interaction content in the work memory information may be input into a disambiguation neural network model so as to obtain the type of at least part of content with ambiguity in the user input output by the disambiguation neural network model. The disambiguation neural network model may be subjected to measurement training by a type corpus, so that the user input can be combined with the information of the node relevant to the current human-machine interaction in the work memory information to be closer to the corresponding type in the type corpus, thus outputting at least part of content with ambiguity in the user input and the type of the at least part of content with ambiguity. Here, it is an example, but not a limitation, to illustrate how to determine the at least part of content with ambiguity in the user input and the type of the at least part of content with ambiguity.

It may be understood that it is not limited here that the disambiguation cannot be performed without performing according to the work memory information, for example, the user input may be disambiguated based on a conversation library in the long-term memory information. For example, in the conversation library, if the input "I love *The Water Margin"* is more inclined to the reading intention, the type of *"The Water Margin"* may be determined as a novel.

According to one or more examples of the present application, the conversation understanding module 1021 may be configured to perform disambiguation and information complementation. The semantic content of the user input may be further analyzed based on the disambiguation result and the complemented user input so as to improve the accuracy of conversation understanding.

The subsequent operation may be decided based on a communicative intention. For example, the communicative intention is query, and an intention query expression may be generated based on the disambiguation result, the complemented user input and the communicative intention. If the communicative intention is to say goodbye according to the intention expression, querying relevant knowledge information is not needed. When searching the relevant knowledge information is needed, whether there is knowledge information relevant to the user input may be first searched in the work memory information, if not, whether there is knowledge information relevant to the user input is continuously searched in the long-term memory information.

According to one or more examples of the present application, the conversation understanding module 1021 may further include: a query submodule 10214, configured to, according to the semantic content of the user input and the communicative intention corresponding to the user input in the current human-machine interaction, query information of the relevant node of the user input from the work memory information; and a sorting submodule 10215, configured to, according to the degree of relevance with the user input, sort the relevant nodes of the user input acquired by query, wherein the sorting is performed based on the logical control information of the relevant node. For example, scoring may be performed based on popularity or timeliness, etc. to determine the degree of relevance between the relevant nodes and the user input, so that conversation decision can be made according to the degree of relevance of the relevant nodes with the user input, and relevance between a reply generated by the conversation system and the user input can be realized.

According to one or more examples of the present application, the conversation understanding module 1021 is further configured to assign different scores to the relevant nodes according to the degree of relevance with the user input, so that reference can be provided for conversation decision. For example, the score relevant to the user input may be added to the logical control information of the core node of the third directed graph in the work memory information.

The semantic content of the user input obtained through analysis, for example, may be a core node relevant to the user input in the third directed graph.

According to one or more examples of the present application, under the condition that different scores are assigned to the relevant nodes according to the degree of relevance with the user input, the conversation control module is configured to perform the following operation to plan a reply to the user input in the current human-machine interaction situation: according to the sorting result, a conversation target is planned and node information with the highest degree of relevance with the user input is selected as the conversation content of the plan; and the conversation content and the conversation target are integrated to serve as second input and the second input is provided for the neural network system, so that knowledge information can be integrated into the conversation system and a reply is planned according to the user input, thereby making the conversation logic clear.

It may be understood that the degree of relevance between the relevant nodes and the user input may be obtained based on the logical control information of the node in the intention knowledge graph, the degree of relevance between the relevant nodes and the user input may also be obtained based on the conversation library, and the degree of relevance between the relevant nodes and the user input may also be obtained based on user preferences, which are not limited herein as long as the degree of relevance between the relevant nodes and the user input can be obtained from the knowledge information. The preference of the user may be obtained based on the current human-machine interaction content and the historical human-machine interaction content of the user. For example, the user is involved in reading in multiple human-machine interaction, so it may be determined that the user likes reading, and the conversation content may be planed according to the preference of the user in the conversation decision making process.

According to one or more examples of the present application, when there is no knowledge information corresponding to user input in the work memory information, relevant knowledge information may be acquired from the long-term memory information based on the semantic content of the user input to update the work memory information; and then a reply to the user input is planned in the current human-machine interaction situation based on the semantic content and communicative intention of the user input and the updated work memory information.

For example, as shown in FIG. 4, the received first user input is: do you know who is the protagonist of movie C? The semantic content of the understanding result of the first user input is the movie C and the communicative intention is question-and-answer. Information relevant to the movie C may be acquired from the long-term memory information according to the understanding result of the first user input and may be added to the work memory information to update the work memory information. That is, a node unit where the core node "movie C" is located in FIG. 4 is added to the work memory information to update the work memory information. Then a reply to the first user input is planned according to the communicative intention and information relevant to the core node "movie C" in the work memory information. For example, a first conversation target may be planned as question-and-answer, and first conversation content may be planned as that "Zhang San" is the protagonist. The neural network system generates "Zhang San" as an answer based on the first user input as well as the integration result of the first conversation target plan and the first conversation content plan.

Then, the received second user input is: I like Zhang San very much. The semantic content of the understanding result of the second user input is Zhang San and the communicative intention is chat. If it is determined that relevant information about "Zhang San" is not stored in the work memory at this time, information relevant to "Zhang San" may be acquired from the long-term memory information according to the understanding result of the second user input and may be added to the work memory information to update the work memory information. That is, a node unit where the core node "Zhang San" is located in FIG. 4 is added to the work memory information to update the work memory information; and then a reply to the second user input is planned according to the communicative intention and the information relevant to "Zhang San" in the work memory information. For example, a second conversation target may be planned as chat, and second conversation content may be planned as "caring". The neural network system generates "she is very caring" as an answer based on the second user input as well as the integration result of the second conversation target plan and the second conversation content plan.

If there is no relevant knowledge information about the user input in the long-term memory information, a reply is planned as empty. The neural network system generates an answer based on the user input.

After chat with a set number of rounds (such as two rounds or three rounds), a conversation target may be planned as recommendation, and knowledge information of other nodes with higher degree of relevance is recommended based on the previous core node corresponding to the current human-machine interaction content in the work memory information, so that knowledge points can be actively switched after many chats, thereby avoiding an awkward conversation.

For example, in the above example, the received third user input is: in addition to caring, she is also talented. The communicative intention is chat. Then, a reply to the third user input is planned according to the communicative intention and other nodes with higher degree of relevance with the previous core node "Zhang San" corresponding to the current human-machine interaction content in the work memory information. For example, a third conversation target may be planned as recommendation, and then information of other nodes with higher degree of relevance with the core node "Zhang San" may be acquired from the long-term memory information according to the previous core node "Zhang San" corresponding to the current human-machine interaction content in the work memory information. For example, a core node "movie D" with higher popularity may be acquired. Based on this, third conversation content may be planned as "movie D" and "a very French short film". The neural network system generates "recommend a movie D starring Zhang San, a very French short film" as an answer based on the third user input as well as the integration result of the third conversation target plan and the third conversation content plan.

Based on this, according to one or more examples of the present application, when the work memory information is not updated for the user input, in response to the node with the highest degree of relevance cannot meet a predetermined standard (for example, the score of each piece of candidate reply content does not reach a predetermined threshold), the long-term memory information is re-queried to update the work memory information, so that chat knowledge points can be actively recommended or switched to avoid an awkward conversation.

According to another aspect of the present disclosure, an electronic device is further provided. The electronic device includes: a processor; and a memory storing a program, wherein the program includes an instruction, and the instruction, when being executed by the processor, enables the processor to perform the method according to the above.

According to another aspect of the present disclosure, a computer-readable storage medium storing a program is further provided, wherein the program includes an instruction, and the instruction, when being executed by the processor of the electronic device, enables the electronic device to perform the method according to the above.

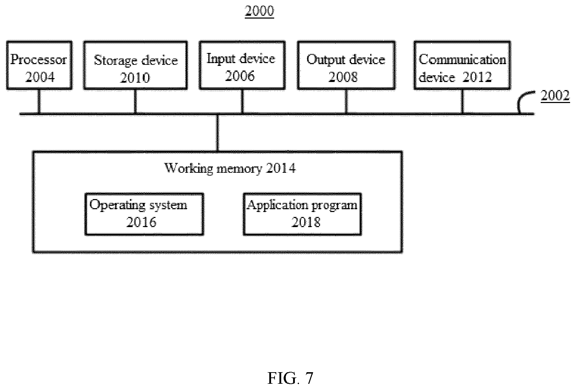

Referring to FIG. 7, a computing device 2000 is described and is an example of a hardware device (electronic device) which may be applied to various aspects of the present disclosure. The computing device 2000 may be any machine configured to perform processing and/or computing, and may be, but not limited to, a workstation, a server, a desk computer, a laptop computer, a tablet computer, a personal digital assistant, a robot, a smart phone, a vehicle-mounted computer or any combination thereof. The above method may be all or at least partially implemented by the computing device 2000, similar devices or systems.

The computing device 2000 may include a component connected to a bus 2002 or communicating with the bus 2002 (possibly through one or a plurality of interfaces). For example, the computing device 2000 may include the bus 2002, one or more processors 2004, one or more input devices 2006 and one or more output devices 2008. The one or more processors 2004 may be any type of processor, and may include, but are not limited to, one or more general-purpose processors and/or one or more special processors (such as a special processing chip). The input device 2006 may be any type of device capable of inputting information to the computing device 2000, and may include, but is not limited to, a mouse, a keyboard, a touch screen, a microphone and/or a remote controller. The output device 2008 may be any type of device capable of presenting information, and may include, but is not limited to, a display, a loudspeaker, a video/audio output terminal, a vibrator and/or a printer. The computing device 2000 may further include a non-transient storage device 2010. The non-transient storage device 2010 may be non-transient, may be any storage device capable of realizing data storage, and may include, but is not limited to, a disk drive, an optical storage device, a solid state memory, a soft disk, a flexible disk, a hard disk, a magnetic tape or any other magnetic mediums, an optical disk or any other optical mediums, a read-only memory (ROM), a random access memory (RAM), a cache memory and/or any other memory chips or boxes, and/or any other mediums from which a computer may read data, instructions and/or codes. The non-transient storage device 2010 may be detached from an interface. The non-transient storage device 2010 may have data/programs (including instructions)/codes for implementing the above method and steps. The computing device 2000 may further include a communication device 2012. The communication device 2012 may be any type of device or system capable of communicating with an external device and/or a network, and may include, but is not limited to, a modem, a network card, an infrared communication device, a wireless communication device and/or a chipset, for example, a Bluetooth TM device, a 1302.11 device, a WiFi device, a WiMax device, a cellular communication device and/or an analogue.

The computing device 2000 may further include a working memory 2014 which may be any type of working memory capable of storing programs (including instructions) and/or data useful for the work of the processor 2004, and may include, but is not limited to, a random access memory and/or a read-only memory device.

A software element (program) may be located in the working memory 2014, including, but not limited to, an operating system 2016, one or more application programs 2018, a driving program and/or other data and codes. An instruction for performing the above method and steps may be included in one or more application programs 2018, and the above construction method may be implemented by performing processor 2004 reading and executing instructions of one or more application programs 2018. More specifically, in the above method, the step S 101 to the step S105 may, for example, be implemented by executing the application programs 2018 which execute the instructions of the step S 101 to the step S105 via the processor 2004. In addition, other steps in the above method may, for example, be implemented by executing the application programs 2018 which execute the instructions of the corresponding steps via the processor 2004. An executable code or source code of the instruction of the software element (program) may be stored in a non-transient computer readable storage medium (such as the storage device 2010), and may be stored into the working memory 2014 (may be compiled and/or installed) when being executed. The executable code or source code of the instruction of the software element (program) may also be downloaded from a remote location.

It should be understood that various variations may be made according to specific requirements. For example, a specific component may be implemented by custom hardware and/or by hardware, software, firmware, middleware, a microcode, a hardware description language or any combination thereof. For example, some or all of the disclosed methods and devices may be implemented by programming hardware (for example, a programmable logic circuit including a field programmable gate array (FPGA) and/or a programmable logic array (PLA)) by an assembly language or hardware programming language (such as VERILOG, VHDL, C++) according to the logic and algorithm of the present disclosure.

It should also be understood that the aforementioned method may be implemented through a server-client side mode. For example, the client side may receive data of user input and transmit the data to the server. The client side may also receive data of user input, perform part of processing in the aforementioned method and transmit the acquired data to the server. The server may receive data from the client side, perform the aforementioned method or another part of the aforementioned method and return the execution result to the client side. The client side may receive the execution result of the method from the server, and for example, may present the execution result to the user through the output device.

It should also be understood that an assembly of the computing device 2000 may be distributed on a network such as a cloud platform. For example, some processing may be performed by one processor, and other processing may be performed by another processor away from the processor. Other assemblies of the computing system 2000 may also be similarly distributed. In this way, the computing device 2000 may be interpreted as a distributed computing system performing processing at a plurality of locations.

Although the examples of the present disclosure have been described with reference to the accompanying drawings, it should be understood that the above method, system and device are exemplary examples, and the scope of the present invention is not limited by these examples and is limited by the authorized claims and their equivalent scopes. Various elements in the examples may be omitted or may be replaced by their equivalent elements. In addition, various steps may be performed in an order different from that described in the present disclosure. Further, various elements of the examples may be combined in various ways. It is important that as the technology evolves, many elements described therein may be replaced by the equivalent elements that appear after the present disclosure.

## Claims

1. A computer-implemented human-machine interaction method based on a neural network, comprising:
providing (S101) a user input as a first input for a neural network system;
providing (S102) the user input for a conversation control system different from the neural network system;
based on information relevant to the user input, processing (S103) the user input by the conversation control system;
providing (S104) a processing result of the conversation control system as a second input for the neural network system; and
generating (S105), by the neural network system, a reply to the user input based on the first and second input.

2. The method of claim 1, wherein the information relevant to the user input comprises work memory information which is valid only during the current human-machine interaction and long-term memory information.

3. The method of claim 2, wherein the long-term memory information comprises knowledge information in the form of a first directed graph including nodes and one or more directed edges, the nodes in the first directed graph are structured data including semantic content and logical control information, and each of the one or more directed edges in the first directed graph represents a relevance attribute between relevant nodes.

4. The method of claim 3, wherein the logical control information comprises information to screen nodes relevant to the current human-machine interaction.

5. The method of claim 3 or 4, wherein the logical control information comprises information to determine the degree of relevance between the nodes in the current human-machine interaction.

6. The method of any one of claims 3 to 5, wherein each of nodes in the first directed graph comprises a first type of nodes and a second type of nodes, the semantic content of the second type of nodes is a part of the semantic content of the first type of nodes relevant to the second type of nodes, and the logical control information of the second type of nodes comprises at least one of the followings: the popularity of the second type of nodes under the first type of nodes relevant to the second type of nodes, a relevance skip relationship between the second type of nodes and at least one of other second type of nodes, and a subtype of the second type of nodes.

7. The method of claim 6, wherein each of nodes in the first directed graph comprises a third type of nodes, the semantic content of the third type of nodes supports multi-mode content, and the logical control information of the third type of nodes comprises at least one of the followings: information of the second type of nodes relevant to the third type of nodes and information for representing the semantic content of the third type of nodes.

8. The method of any one of claims 3 to 7, wherein the long-term memory information comprises conversation library information in the form of a second directed graph including nodes and one or more directed edges, and the second directed graph is isomorphic to the first directed graph.

9. The method of any one of claims 3 to 8, wherein the work memory information comprises information in the form of a third directed graph including nodes and one or more directed edges; and the third directed graph is isomorphic to the first directed graph and is a part of the first directed graph.

10. The method of claim 9, wherein the work memory information comprises semantic content and logical control information of all nodes relevant to the current human-machine interaction and taken from the first directed graph.

11. The method of claim 9 or 10, wherein the work memory information comprises first information for marking a semantic content that has been involved in the current human-machine interaction.

12. The method of claim 11, wherein the work memory information comprises second information for indicating a conversation party who first mentioned the semantic content that has been involved.

13. The method of any one of claims 9 to 12, wherein the work memory information comprises historical data of interaction record during the current human-machine interaction.

14. The method of any one of claims 2 to 13, wherein the processing result comprises a plan for replying to the user input in the current human-machine interaction situation.

15. The method of claim 14, wherein processing the user input by the conversation control system comprises:
analyzing the semantic content of the user input; and
analyzing a communicative intention of the user corresponding to the user input in the current human-machine interaction.

16. The method of claim 15, wherein analyzing the semantic content of the user input comprises:
determining whether the user input is able to correspond to a certain node in the work memory information; and
in response to the user input is able to correspond to the certain node in the work memory information, processing the user input based on the work memory information.

17. The method of claim 16, wherein processing the user input comprises:
based on information of the certain node in the work memory information, supplementing relevant content for the user input.

18. The method of claim 16 or 17, wherein analyzing the semantic content of the user input further comprises:
in response to the user input is unable to correspond to the node in the work memory information, extracting information of a node relevant to the user input from the long-term memory information and storing the information in the work memory information.

19. The method of any one of claims 15 to 18, wherein analyzing the semantic content of the user input comprises:
disambiguating the user input.

20. The method of claim 19, wherein disambiguating the user input comprises:
based on node information relevant to the current human-machine interaction in the user input and the work memory information, identifying at least part of content with ambiguity in the user input and determining the meaning of the at least part of content in the current human-machine interaction situation.

21. The method of any one of claims 18 to 20, wherein processing the user input by the conversation control system further comprises:
according to the semantic content of the user input and the communicative intention corresponding to the user input in the current human-machine interaction, querying information of the relevant nodes of the user input from the work memory information; and
according to the degree of relevance with the user input, sorting the relevant nodes of the user input acquired by query, wherein the sorting is performed based on the logical control information of the relevant nodes.

22. The method of claim 21, wherein processing the user input by the conversation control system further comprises:
according to the degree of relevance with the user input, assigning different values to the relevant nodes.

23. The method of claim 21 or 22, wherein the plan for replying to the user input in the current human-machine interaction situation comprises:
according to the sorting result, planning a conversation target and selecting node information with the highest degree of relevance with the user input as a conversation content of the plan; and
integrating the conversation content of the plan and the conversation target as the second input and providing the second input for the neural network system.

24. The method of claim 23, wherein the plan for replying to the user input in the current human-machine interaction situation further comprises:
in the case where the work memory information is not updated for the user input and in response to the node with the highest degree of relevance is unable to meet a predetermined standard, re-querying the long-term memory information to update the work memory information.

25. The method of any one of the forgoing claims, wherein the neural network system is an end-to-end neural network system.

26. The method of claim 25, wherein the end-to-end neural system is provided with an encoder and a decoder, the encoder is configured to receive the user input and the stored historical interaction information of the current human-machine interaction, and the decoder is configured to receive the second input and generate the reply to the user input.

27. A human-machine interaction apparatus based on a neural network, comprising:
a neural network system (101), configured to receive a user input as a first input; and
a conversation control system (102) different from the neural network system, configured to receive the user input,
wherein the conversation control system is further configured to process the user input based on information relevant to the user input and provide the processing result as second input for the neural network system; and
the neural network system is further configured to generate a reply to the user input based on the first and second input.

28. The apparatus of claim 27, further comprising: a storage and computing system (103), wherein the storage and computing system comprises a work memory module and a long-term memory module; and the information relevant to the user input comprises long-term memory information which is taken from the long-term memory module as well as work memory information which is taken from the work memory module and is valid only during the current human-machine interaction.

29. The apparatus of claim 28, wherein an intention knowledge graph is stored in the long-term memory module and comprises knowledge information in the form of a first directed graph including nodes and one or more directed edges, and wherein the nodes in the first directed graph are structured data including semantic information and logical control information, and each of the one or more directed edges in the first directed graph represents a relevance attribute between the relevant nodes.

30. The apparatus of claim 29, wherein the logical control information comprises information to screen nodes relevant to the current human-machine interaction.

31. The apparatus of claim 29 or 30, wherein the logical control information comprises information to determine the degree of relevance between the nodes in the current human-machine interaction.

32. The apparatus of claims 29 to 31, wherein each of nodes in the first directed graph comprises a first type of nodes and a second type of nodes, the semantic content of the second type of nodes is a part of the semantic content of the first type of nodes relevant to the second type of nodes, and the logical control information of the second type of nodes comprises at least one of the followings: the popularity of the second type of nodes under the first type of nodes relevant to the second type of nodes, a relevance skip relationship between the second type of nodes and at least one of other second type of nodes, and a subtype of the second type of nodes.

33. The apparatus of claim 32, wherein each of nodes in the first directed graph comprises a third type of nodes, the semantic content of the third type of nodes supports multi-mode content, and the logical control information of the third type of nodes comprises at least one of the followings: information of the second type of nodes relevant to the third type of nodes and information for representing the semantic content of the third type of nodes.

34. The apparatus of any one of claims 29 to 33, wherein a conversation library is stored in the long-term memory and comprises conversation library information in the form of a second directed graph including nodes and one or more directed edges, and the second directed graph is isomorphic to the first directed graph.

35. The apparatus of any one of claims 29 to 34, wherein work memory information is stored in the work memory module and comprises information in the form of a third directed graph including nodes and one or more directed edges; and the third directed graph is isomorphic to the first directed graph and is a part of the first directed graph.

36. The apparatus of claim 35, wherein the work memory information comprises semantic content and logical control information of all nodes relevant to the current human-machine interaction and taken from the first directed graph.

37. The apparatus of claim 35 or 36, wherein the work memory information comprises first information for marking a semantic content that has been involved in the current human-machine interaction.

38. The apparatus of claim 37, wherein the work memory information comprises second information for indicating a conversation party who first mentioned the semantic content that has been involved.

39. The apparatus of any one of claims 35 to 38, wherein the work memory information comprises historical data of interaction record during the current human-machine interaction.

40. The apparatus of any one of claims 28 to 39, wherein the processing result comprises a plan for replying to the user input in the current human-machine interaction situation.

41. The apparatus of claim 40, wherein the conversation control system comprises a conversation understanding module and a conversation control module, and the conversation understanding module is configured to
analyze the semantic content of the user input; and
analyze a communicative intention of the user corresponding to the user input in the current human-machine interaction.

42. The apparatus of claim 41, wherein the conversation understanding module comprises:
a determining submodule, configured to determine whether the user input is able to correspond to a certain node in the work memory information; and
a processing submodule, configured to, in response to the user input is able to correspond to the certain node in the work memory information, process the user input based on the work memory information.

43. The apparatus of claim 42, wherein the processing submodule is further configured to supplement relevant content for the user input based on information of the certain node in the work memory information.

44. The apparatus of claim 42 or 43, wherein the conversation understanding module is further configured to, in response to the user input is unable to correspond to the node in the work memory information, extract information of a node relevant to the user input from the long-term memory information and store the information in the work memory information.

45. The apparatus of any one of claims 41 to 44, wherein the conversation understanding module comprises:
a disambiguation submodule, configured to disambiguate the user input.

46. The apparatus of claim 45, wherein the disambiguation submodule is further configured to, based on node information relevant to the current human-machine interaction in the user input and the work memory information, identify at least part of content with ambiguity in the user input and determine the meaning of the at least part of content in the current human-machine interaction situation.

47. The apparatus of any one of claims 44 to 46, wherein the conversation understanding module comprises:
a query submodule, configured to, according to the semantic content of the user input and the communicative intention corresponding to the user input in the current human-machine interaction, query information of the relevant nodes of the user input from the work memory information; and
a sorting submodule, configured to, according to the degree of relevance with the user input, sort the relevant nodes of the user input acquired by query, wherein the sorting is performed based on the logical control information of the relevant nodes.

48. The apparatus of claim 47, wherein the conversation understanding module is further configured to, according to the degree of relevance with the user input, assign different values to the relevant nodes.

49. The apparatus of claim 47 or 48, wherein the conversation control module is configured to perform the following operations to plan a reply to the user input in the current human-machine interaction situation:
according to the sorting result, planning a conversation target and selecting node information with the highest degree of relevance with the user input as a conversation content of the plan; and
integrating the conversation content of the plan and the conversation target to serve as second input and providing the second input for the neural network system.

50. The apparatus of claim 49, wherein the conversation understanding module is further configured to, in the case where the work memory information is not updated for the user input and in response to the node with the highest degree of relevance is still unable to meet a predetermined standard, re-query the long-term memory information to update the work memory information.

51. The apparatus of any one of claims 27 to 50, wherein the neural network system is an end-to-end neural network system.

52. The apparatus of claim 51, wherein the end-to-end neural system is provided with an encoder and a decoder, the encoder is configured to receive the user input and the stored historical interaction information of the current human-machine interaction, and the decoder is configured to receive the second input and generate the reply to the user input.

53. A computer program product comprising instructions, which, when the program is executed by a computer, causes the computer to carry out the method of any one of claims 1 to 26.
